**Europäisches Patentamt**

**European Patent Office**

**Office européen des brevets**

(19)

(11) **EP 1 437 850 A1**

(12) **EUROPÄISCHE PATENTANMELDUNG**

(43) Veröffentlichungstag:
**14.07.2004   Patentblatt 2004/29**

(51) Int Cl.⁷: **H04L 1/00**

(21) Anmeldenummer: **03000426.1**

(22) Anmeldetag: **10.01.2003**

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO**

(71) Anmelder: **SIEMENS AKTIENGESELLSCHAFT**
**80333 München (DE)**

(72) Erfinder:
• **Costa, Elena, Dr.**
  **85748 Garching (DE)**

• **Gibidouline, Ernst, Prof.**
  **141700 Dolgoprudny (RU)**
• **Loft, Matthias**
  **82061 Neuried (DE)**
• **Pavlushkov, Victor**
  **22644 Lund (SE)**
• **Schulz, Egon, Dr.**
  **80993 München (DE)**

(54) **Verfahren und Kommunikationssystemvorrichtung zum codemodulierten Übertragen von Information**

(57)   Die Erfindung bezieht sich auf ein Verfahren zum codemodulierten Übertragen von Informationen ($d_a$) in einem Kommunikationssystem (WLAN) über einen Träger (V) mit zumindest zwei voneinander unabhängigen und zueinander orthogonalen Ressourcen, insbesondere als erster Ressource einem Frequenzband (F) mit einer Anzahl von Subressourcen ($f_j$) und als zweiter Ressource der Zeit (T) mit einer Abfolge von Zeitschlitzen als Subressource (fi).

Für die Zuordnung der Information zu den einzelnen Ressourcen wird ein Code (C) aus codierten Daten bzw. Informationen in Form einer zweidimensionalen Matrize verwendet, wobei diese Matrize einen Rang (d) größer oder gleich 2 hat. Die Abbildung der Codeelemente auf die Symbole eines OFDM-Übertragungssystems erfolgt dabei ein-eindeutig derart, dass empfängerseitig nicht nur Übertragungsfehler in der ersten Subressource sondern auch Übertragungsfehler in der zweiten Subressource rekonstruierbar sind.

FIG 2

EP 1 437 850 A1

**Beschreibung**

Die Erfindung bezieht sich auf ein Verfahren zum codemodulierten Übertragen von Informationen in einem Kommunikationssystem mit den oberbegrifflichen Merkmalen des Patentanspruchs 1 bzw. auf eine Kommunikationssystemvorrichtung zum Durchführen eines solchen Verfahrens.

Allgemein bekannt ist eine Vielzahl verschiedenartigster Kommunikationssysteme zum Übertragen von Informationen, beispielsweise gemäß den Standards Global System for Mobile Communications (GSM), Universal Mobile Telecommunications System (UMTS) oder auch gemäß diversen Standards zur Übertragung von Daten über Funkschnittstellen in mobilen Datennetzen (WLAN).

Bei derartigen Kommunikationssystemen werden Daten bzw. Informationen einer Datenquelle über einen Träger übertragen, welcher zumindest zwei voneinander unabhängige und zueinander orthogonale Ressourcen zum Übertragen der Informationen aufweist. Bei beispielsweise dem sogenannten Frequency Division Multiple Access (FDMA) werden die Informationen codiert und auf eine Vielzahl verschiedener Subressourcen (Unterressourcen) in Form von Unterfrequenzen oder Unterfrequenzbändern des als Träger verfügbaren Frequenzbandes aufgeteilt.

Um den vollständigen Verlust übertragener Informationen bei schlechten Übertragungsbedingungen in einem als Subressource gewählten Unterfrequenzband zu verhindern, werden Codierungen verwendet, bei denen die Information codiert auf mehrere Subressourcen verteilt wird. Dadurch ist empfängerseitig eine Rekonstruierung der ursprünglichen Information auch bei Auftreten eines oder mehrerer Übertragungsfehler im Bereich der Subressource möglich.

Als ein beispielhafter Code ist der so genannte Reed-Solomon-Code bekannt. Dabei führt die Codierung einer Informationsabfolge und eine Modulation zu einem Signal

$$S = [u_1, u_2, \dots, u_n],$$

wobei $u_i$, i = 1,2,...n Symbole eines Modulationsverfahrens sind. Diese Symbole enthalten üblicherweise einen codierten Informationswert, in welchen bei Verwendung orthogonaler Codes weitere codierte Informationswerte der gleichen oder einer anderen Datenquelle eingemischt sind. Diese Symbole werden dann einer Frequenzmodulation unterzogen, beispielsweise BPSK, 4-PM, 16-QAM. Würde das derart erstellte Signal über einen Träger übertragen werden, so würde im Fall eines Burst-Fehlers der vollständige Informationsverlust unvermeidbar sein. Daher wird aus dem Signal unter Verwendung des sogenannten Interleaving eine Matrix

$$S = \begin{bmatrix} s_1 \\ s_2 \\ \vdots \\ s_m \end{bmatrix} = \begin{bmatrix} u_{1,1} & u_{1,2} & \cdots & u_{1,n} \\ u_{2,1} & u_{2,2} & \cdots & u_{2,n} \\ \vdots & \vdots & \cdots & \vdots \\ u_{m,1} & u_{m,2} & \cdots & u_{m,n} \end{bmatrix}$$

erstellt, wobei m ein Interleaving-Grad ist. Diese Matrix wird dann über einen Träger Spalte für Spalte übertragen. Falls einige wenige Spalten der Matrix S während der Übertragung verloren gehen, ist es aufgrund des Interleavings trotzdem noch möglich, empfängerseitig das Signal aufgrund der Eigenschaften des Reed-Solomon-Codes zu korrigieren und die Informationen zu rekonstruieren.

Bei dem Reed-Solomon-Code handelt es sich um einen Block-Code, der auf einem Galois-Feld (GF) mit $2^m$ Symbolen definiert wird. Zusätzlich zu diesem Aufbau ist bei der Verwendung des Reed-Solomon-Codes eine Verwürfelung (Scrambling) erforderlich. Nachteilhaft ist bei dieser Verfahrensweise jedoch neben dem Aufwand für die Code-Bestimmung und die zusätzliche Verwürfelung insbesondere, dass für den Ausfall einer ganzen Spalte oder Zeile dieses Galois-Feldes eine Rekonstruierung beim Empfänger nicht möglich ist. Durch die Codierung und Modellierung auf verschiedene Frequenzen wird zwar der Verlust eines Frequenz-Sub-Trägers korrigierbar. Fällt jedoch bei der Übertragung ein ganzer Zeitschlitz aus, so fehlen empfängerseitig die Informationen sämtlicher der Frequenz-Sub-Träger des entsprechenden Informationssymbols, was eine Rekonstruktion unmöglich macht.

Eine ähnliche Problemstellung ergibt sich für eine Raum-Zeit-Codierung. Falls bei der vorstehenden Matrix S der Index m für eine Anzahl sendender Antennen und der Index n für eine Anzahl von Zeitschlitzen gesetzt wird, kann ein übertragenes Signal wieder als eine Matrix des vorstehenden Typs beschrieben werden. Folglich ist auch bei einer Raum-Zeit-Codierung der Verlust eines ganzen Zeitschlitzes empfängerseitig bei der Rekonstruierung der ursprünglichen Information nicht ausgleichbar.

Allgemein können Systeme mit parallelen Kanälen, z. B. TDMA (Time Division Multiple Access), FDMA etc. mit einer gemeinsamen Informationsquelle und einer gemeinsamen Zielstation bzw. Informationssenke durch eine solche Matrixdarstellung beschrieben werden. Das Problem besteht allgemein in der Fehlerkorrektur. Falls die Korruption einer geringen Anzahl von Spalten das wahrscheinlichste Ereignis ist, dann ist eine anwendbare Lösung eine Reed-Solomon-Codierung in Kombination mit Interleaving oder Scrambling.

Allgemein bekannt ist auch eine Vielzahl von Algorithmen zum Decodieren derart codierter Informationen seitens eines Empfängers, welche in einer Mehrwege-Umgebung (multipath environment) eine annehmbare Leistungsfähigkeit ermöglichen.

Falls andererseits eine einzige oder gar wenige Zeilen unzureichend übertragen werden können oder ganz verloren gehen, ist die Reed-Solomon-Codierung ineffektiv, da eine entsprechend häufige Wiederholung der Übertragung von Informationen erforderlich wäre.

Ein prinzipieller Grundgedanke, zur Codierung von Informationen einen sogenannten Rank-Code zu verwenden, ist aus EM Gabidoulin, "Theory of Codes with Maximum Rank Distance, Probl. Inform. Transm. (Problemy Predachi Informatsii)", vol. 21, No. 1, pp. 1-12, Juli 1985, bekannt. Beschrieben werden Vektoren, die linear abhängig über einem Galois-Feld GF (Q) definiert werden. Beschrieben werden dabei auch einfache Algorithmen für eine Encodierung bzw. Decodierung, wobei auf eine Analogie zu Reed-Solomon-Codes zurückgegriffen wird.

Problematisch ist dabei, dass ein Decodierverfahren mit Anlehnung an ein Reed-Solomon-Decodierverfahren die Vorteile zunichte macht, welche sich eigentlich durch die Verwendung des Rank-Codes ergeben könnten. Es mangelt somit an einem geeigneten Verfahren zur Umsetzung des Grundgedankens auf realistische Anwendungsbedingungen in einem modernen Punkt-Kommunikationssystem.

Allgemein ist aus WLAN (Wireless Local Area Network) oder HiperLAN2 die Möglichkeit einer Kombination von OFDM (Orthogonal Frequency Division Multiplexing) und Reed-Solomon-Codes bekannt. Diese Kombination konnte sich bei den entsprechenden Diskussionen in den Standardisierungsgremien jedoch nicht durchsetzen, da sie eine schlechte Leistungsfähigkeit bietet und mit Blick auf das erforderliche Interleaving aufwendig ist. Anstelle dessen wurde für die Datennetze ein Block-Code oder ein Faltungscode verwendet, welche Fehler bündeln. Aus dem GSM-Mobilfunksystem ist die Verwendung von Reed-Solomon-Codes in Kombination mit Interleaving allgemein bekannt.

Eine geeignete Kombination aus Codierung und Modulation hat in den letzten Jahren insbesondere durch die Einführung von den Mehrträgersystemen auf Basis des Orthogonal Frequency Division Multiplex (OFDM) bei funkgestützten Kommunikationssystemen, z. B. DAB, DVB-T und HiperLAN/2-Systemen, zugenommen. Eine Schlüsseltechnik besteht in der Gitter- bzw. Trellisicodierten Modulation (TCM), welche die Codeleistungsfähigkeit und die Systemleistungsfähigkeit durch das geeignete Zuweisen der Codeworte zum Modulationsalphabet verbessert.

Jedoch ist das Erzeugen guter Code mit einer hohen Effizienz mit Blick auf den Hamming/Euclidean-Abstand keine leichte Aufgabe. Ein Hauptproblem besteht darin, die Frequenz-selektive Ausblendung des Funkkanals zu bewältigen. Ein anderes Problem kommt auf, wenn ein funkgestütztes Kommunikationssystem in einer Umgebung mit impulsartigem Rauschen betrieben wird. In diesem Fall können viele Zeitrahmen bzw. Zeitschlitze gestört werden.

Die Aufgabe der Erfindung besteht darin, ein Verfahren zum codemodulierten Übertragen von Informationen derart zu verbessern, dass nicht nur Übertragungsfehler in einer ersten Subressource empfängerseitig ausgeglichen werden können.

Diese Aufgabe wird durch das Verfahren zum codemodulierten Übertragen von Informationen und die Kommunikationssystemvorrichtung mit den jeweiligen Merkmalen der unabhängigen Patentansprüche gelöst. Vorteilhafte Ausgestaltungen sind Gegenstand abhängiger Patentansprüche.

Ausgehend von der Situation einer codemodulierten Übertragung von Informationen in einem Kommunikationssystem, insbesondere Funk-Kommunikationssystem, über einen Träger mit zumindest zwei voneinander unabhängigen und zueinander orthogonalen Ressourcen, beispielsweise einer Gruppe von Subfrequenzen eines Frequenzbandes einerseits und einer Abfolge von Zeitschlitzen einer theoretisch unendlichen Abfolge von Zeitschlitzen, soll die Codierung derart redundant erfolgen, dass ein Übertragungsfehler bei der Übertragung sowohl bei der ersten Subressource, also z. B. einer Subfrequenz, als auch bei der zweiten Subressource, also einem bestimmten Zeitschlitz aus einer Gruppe von Zeitschlitzen, empfangsseitig möglich ist. Dazu wird die ursprüngliche zu übertragende Information mit einem zumindest zweidimensionalen Code codiert und mittels der Codierung sowohl der Subressource der ersten Ressource als auch der Subressource der zweiten Ressource zugeordnet. Unter einer Codebildung wird dabei eine Abbildung verstanden, bei der zu versendende Daten bzw. Informationen durch eine Multiplikation mit einer geeignet gebildeten Generatormatrize in Codeworte gewandelt werden. Unter Code bzw. Codeworte sind somit derart codierte Daten bzw. Informationen zu verstehen. Die Codeworte können in Matrizenform dargestellt werden.

Während bei beispielsweise dem beschriebenen Reed-Solomon-Code ein eindimensionaler Code aufgebaut wird und zusätzlich noch Interleaving oder Scrambling erforderlich sind, wird ein zweidimensionaler, matrizenförmiger Code verwendet, so dass die zu übertragende Information nach der Codierung über sowohl eine Anzahl von ersten Subressourcen der ersten Ressource als auch einer Anzahl von zweiten Subressourcen der zweiten Ressource zugeordnet übertragen werden kann. Informationen bzw. Daten, welche die Rekonstruktion der ursprünglichen Information ermöglichen, werden somit nicht nur auf eine Vielzahl von beispielsweise Subfrequenzen eines Frequenzbandes als erster Ressource sondern zusätzlich auch auf eine Anzahl von z. B. Zeitschlitzen als zweiter Subressource aus einer Gruppe von Zeitschlitzen zugeordnet.

Die Anwendung ist somit insbesondere in einem für sich bekannten OFDM-System (OFDM: Orthogonal Frequency Division Multiplex) möglich, bei dem eine zu übertragende Information codiert wird und das resultierende Symbol einer Frequenzmodulation zugeführt wird.

Vorteilhaft ist bei einer solchen Verfahrensweise nicht nur eine Fehlerkorrektur bezüglich einzelner Fehler in beiden der Ressourcen möglich, sondern auch der vollständige Verlust einer ganzen Subressource sowohl bei der ersten Subressource als auch bei der zweiten Subressource ist empfängerseitig rekonstruierbar.

Bei der Codebildung wird zweckmäßigerweise ein Matrix-Schema mit Zeilen für die Subressourcen der ersten Ressource und Spalten für die Subressourcen der zweiten Ressource verwendet. Um eine Fehlerkorrektur zu ermöglichen, ist eine orthogonale Codeanordnung vorteilhaft. Da sowohl Fehler in der ersten als auch in der zweiten Subressource ausgeglichen werden sollen, wird der Code sowohl bezüglich der einzelnen Codeelemente der ersten Subressource als auch der zweiten Subressource geeignet angepasst gewählt.

Um einen diese Bedingungen erfüllenden Code aufzubauen, wird ein Matrizen-Schema verwendet, bei dem der Rang der Matrize bzw. von deren Determinante größer oder gleich dem Wert zwei ist. Durch die Festlegung des Rangs als Kriterium für den Codeaufbau wird sichergestellt, dass sowohl Fehler in der ersten als auch der zweiten Subressource ausgeglichen werden können. Daher kann auch von einem Rank Code gesprochen werden.

Prinzipiell sind bei einem Ansatz mit s Zeilen und r Spalten beliebig viele Übertragungsfehlermuster rekonstruierbar, solange die Summe t der insgesamt fehlerhaften Zeilen s und fehlerhaften Spalten r kleiner dem halben Rang d ist. Dies lässt sich ausdrücken durch

$$t = s + r < d/2 = (n-k^*+1)/2,$$

wobei n der Codelänge und k* der Nachrichtenlänge eines für sich bekannten (n,k*,d)-Codes mit hier d auch als Rang des Codes gilt. D. h., die Redundanzlänge d eines für sich bekannten Codes entspricht vorliegend zweckmäßigerweise dem Rang d des matrizenförmigen Codes, wodurch eine Fehlerkorrektur in beiden Dimensionen möglich wird.

In der Praxis wird dadurch sowohl die Korrektur von Übertragungsfehlern im Bereich einer oder mehrerer Frequenz-Subressourcen als auch von Übertragungsfehlern im Bereich eines oder mehrerer Zeitschlitze ermöglicht.

Bei der Bildung des Codes über einem Galois-Feld (GF) mit $2^m$ Symbolen ist entsprechend die Anzahl m der ersten Subressource gleich der Anzahl der Bit pro Symbol. Dabei wird der Code als Rank-Code über ein Galois-Feld mit $2^m$ Symbolen definiert. Die zweite Ressource, also eine Gruppe von Zeitschlitzen der theoretisch unendlichen Zeitreihe, entspricht pro Code der Codelänge. D. h. mit anderen Worten, der Codelänge wird eine entsprechende Anzahl n von zweiten Subressourcen, also Zeitschlitzen, zugeordnet.

Einsetzbar ist diese Verfahrensweise insbesondere, wenn die Codeelemente jeweils einem Symbol eines für sich bekannten OFDM-Systems im Zeit-Frequenz-Bereich ein-eindeutig zugeordnet werden. Prinzipiell ist aber auch die Übertragung auf andere Übertragungssysteme möglich. Beispielsweise können die Codeelemente jeweils einem Symbol eines orthogonalen Übertragungssystems im Zeit-Raum-Bereich ein-eindeutig zugeordnet werden. Auch die Übertragung auf einem Code mit mehr als zwei Dimensionen ist prinzipiell möglich.

Eine Kommunikationssystemvorrichtung zum Durchführen eines solchen Verfahrens weist insbesondere eine Steuereinrichtung und einen Speicher zum Zwischenspeichern entsprechender Informationen und Code auf.

Ein Ausführungsbeispiel wird nachfolgend anhand der Zeichnung näher erläutert. Es zeigen:

FIG 1 schematisch die Zuordnung eines Codewortes in Matrix-Darstellung zu OFDM-Symbolen im Zeit-Frequenz-Bereich, und

FIG 2 detaillierter die Codierung von Informationen mit einer entsprechenden Kommunikationssystemvorrichtung zur Übertragung über eine Funk-Schnittstelle.

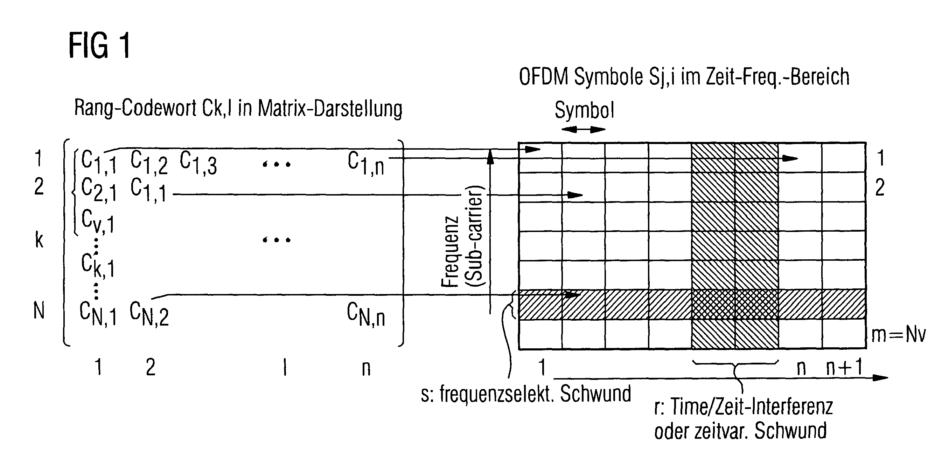

Wie dies aus FIG 1 ersichtlich ist, wird ein Code C in einer Matrix-Darstellung mit Codeelementen $c_{k,1}$ aufgebaut, wobei der Index k von 1 bis m und der Index 1 von 1 bis n laufen soll. Bei dem Aufbau der Codematrix werden sollen sogenannte Rank-Code (Rank-Codes) über einem Galois-Feld (GF) mit $2^m$ Symbolen definiert (GF( $2^m$)). Die Anzahl der Codeworte beträgt $2^{(mk^*)}$ mit m als der Codemächtigkeit und k* als der Nachrichtenlänge. Jedes Codewort C kann somit in Form einer Matrix der Größe m x n mit binären Einträgen dargestellt werden, wobei n der Codelänge und m der Anzahl von Bit je Symbol entspricht. Ein (n,k*,d)-Rank-Code hat zur Ermöglichung der Fehlerkorrektur für Übertragungsfehler in Sub-Frequenzkanälen und Übertragungsfehler in Zeitschlitzen den Rang von mindestens d. Ein solcher Code ermöglicht folglich die Korrektur beliebiger Fehlermuster, die sich auf s Reihen und r Spalten verteilen können. Dabei gilt für die Summe der maximal zulässigen Fehler t:

$$t = s + r < d/2 = (n-k^*+1)/2.$$

Wie aus FIG 1 ersichtlich ist, welche einen $(n,k^*,d)$-Rank-Code in Matrix-Form darstellt, wird eine ein-eindeutige Abbildung der einzelnen Codeelemente auf die OFDM-Symbole im Zeit-Frequenz-Bereich eines OFDM-Systems vorgenommen. Dabei soll die Codelänge n kleiner oder gleich der Anzahl m von Bit je Symbol s sein.

Beim Codieren werden in der einfachsten Ausführungsform die zu versendenden Daten bzw. Informationen $d_a$, $d_{a+1}$, $d_{a+2}$,... mit Hilfe einer geeigneten bestimmten Generatormatrize multipliziert. Einträge der Zeilen des Codewortes $c_{1,1}$, $c_{2,1}$, ... $c_{j,1}$, .... $c_{m,1}$ werden schließlich nach einem Mapping in komplexe Symbole auf die Unterträger eines OFDM-Symbols abgebildet. Die Unterträger entsprechen der Subressource des verwendeten Frequenzbereichs F, also einzelnen Unter- bzw. Subfrequenzen $f_1$, $f_2$, ..., $f_j$, ..., $f_m$ mit j = 1, 2, ..., m. Die einzelnen Elemente einer Spalte der Codematrize C mit den codierten Daten $d_a$ werden somit verschiedenen Subfrequenzen zugeordnet. Dahingegen werden die Spalten der Codematrize verschiedenen Symbolen $s_1$, $s_2$,.... , $s_i$, ..., $s_n$ zugeordnet. D.h., die Elemente einer Zeile werden auf verschiedene Symbole bzw. Zeitschlitze i mit i = 1, 2, ..., n verteilt.

Werden nun mehrere Symbole $s_i$ zu einem Zeitpunkt $t_i$ gestört, beispielsweise durch zeitweilige Interferenzen, oder werden eines oder mehrere ein Subfrequenzbänder als Frequenz-Subressource $f_j$ durch beispielsweise frequenzselektiven Schwund über eine längere Zeitdauer, d. h. eine Vielzahl von Zeitschlitzen bzw. auch Symbolen hinweg, gestört, so ermöglicht die Verwendung des Rank-Codes, diese Fehler empfängerseitig zu beheben. Dies wäre bei der Verwendung eines üblichen Reed-Solomon-Codes, welcher nur eine Subressource, also eine kleine Zahl gestörter Sub-Frequenzbänder effizient korrigieren kann, nicht möglich.

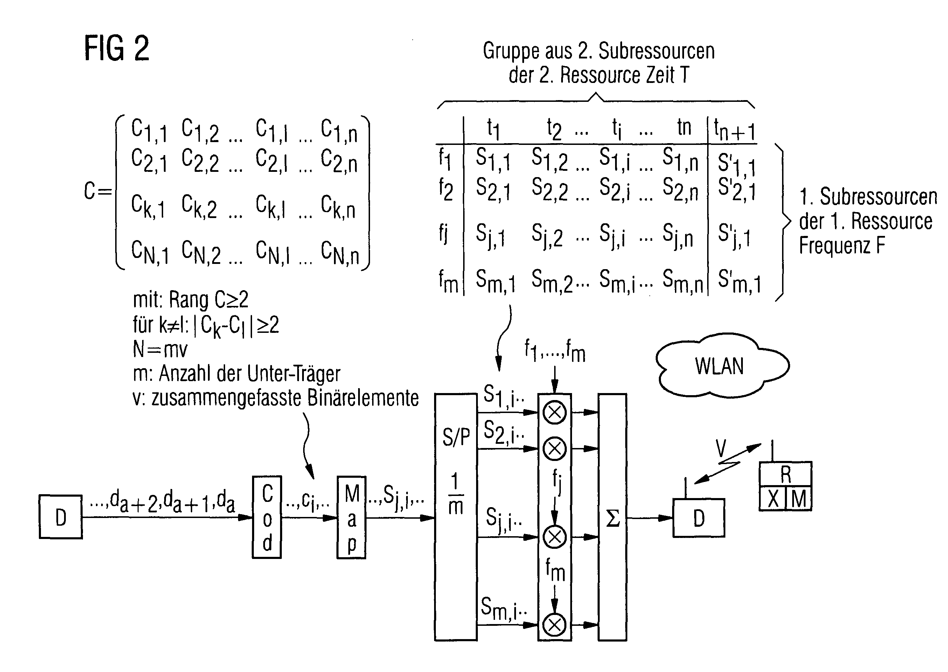

Bei der beschriebenen Verfahrensweise wird somit im Gegensatz zu beispielsweise einem Reed-Solomon-Code in Form eines Vektors ein Rank-Code in Form einer Matrize verwendet. Dies ermöglicht trotz der Verwendung einer Matrize mit einem möglicherweise nur sehr niedrigen Rang eine hohe Korrekturfähigkeit. Insbesondere müssen zum Decodieren auch nicht Reed-Solomon-Decodierverfahren verwendet werden, welche keine geeignete Lösung mit einem zufriedenstellenden Ergebnis bieten würden. Bei Verwendung einer Matrize ist allerdings ein geeignetes Abbilden (Mapping) erforderlich, damit die Eigenschaften nicht verloren gehen. Eine beispielhafte Schaltungsanordnung zum Abbilden der Matrize C bei Umsetzung in einem OFDM-System ist anhand der FIG 2 dargestellt.

Wie aus FIG 2 ersichtlich ist, wird von einer Datenquelle D ein Strom von Informationen bzw. Daten $d_a$, $d_{a+1}$, $d_{a+2}$,... in zeitlicher Abfolge bereitgestellt. Diese Datenfolge $d_a$, $d_{a+1}$, $d_{a+2}$ wird einem Codierer Cod zugeführt, welcher eine Codierung vornimmt. Die Codierung findet dadurch statt, dass die Daten der Datenfolge $d_a$, $d_{a+1}$, $d_{a+2}$ mit einer geeigneten Generatormatrix multipliziert wird, so dass letztendlich eine Datenfolge entsteht, welche in Form der in FIG 2 abgebildeten Code-Matrize C angeordnet werden kann.

Die beispielhafte Code-Matrize C weist Zeilen mit n Codeelementen $c_{1,1}$, $c_{1,2}$, ...,$c_{1,1}$, ... $c_{1,n}$ und N Spalten mit Codeelementen $c_{1,1}$, $c_{2,1}$ ... $c_{k,1}$, ... $c_{N,1}$ usw. auf. Die Code-Matrize C unterliegt dabei den vorstehend beschriebenen Bedingungen einer Rang-Matrize mit einem Rang größer 2. Nach der Multiplizierung der Informationsdatenelemente $d_a$ mit der Generator-Matrize ergibt sich somit ein Datenstrom aus Codematrizenelementen $c_{k,1}$, der zu einer Abbildungs- bzw. Modulationseinrichtung Map geführt wird. In dieser Abbildungs- bzw. Modulationseinrichtung Map findet die eigentliche Abbildung der Code-Elemente bzw. codierten Daten auf die Symbole $s_{j,i}$ statt. Natürlich können die Codierung und die Abbildung auch in einer einzigen Einrichtung ausgeführt werden.

Die Darstellung der Code-Matrize C bzw. der Tabelle mit den Symbolen ist zur Veranschaulichung des Prinzips in Form von Matrizen dargestellt. Natürlich kann auch eine serielle Abarbeitung der einzelnen Datenwerte, codierten Datenwerte und Symbole durchgeführt werden.

Wie weiterhin aus FIG 1 ersichtlich ist, werden jeweils v binäre Elemente $c_{1,1}$ bis $c_{v,1}$ zu einem komplexen Symbol $s_{1,1}$ zusammengefasst, welches dann auf einen Subträger gesetzt und zu einem OFDM-Symbol verarbeitet wird. Die Codematrize C hat daher üblicherweise mehr Zeilen als die Symbolmatrize.

Nach dem Abbilden und Modulieren in der Abbildungseinrichtung Map ergibt sich eine Abfolge von sogenannten Symbolen $s_{j,i}$ mit j = 1, ... m als Index für die jeweils parallelen Leitungen und i = 1, ... n als Index für die verschiedenen Elemente der zeitlichen Ressource $t_i$.

Die Symbole $s_{j,i}$ werden dann einer seriell-zu-parallel-Umsetzungseinrichtung S/P zugeführt, welche m parallele Datenleitungen als Ausgang aufweist. Die Symbole $s_{j,i}$ werden auf diese parallelen Datenleitungen so ausgegeben, dass die Symbole, die einer Zeile der Codematrize **C** oder Symbolmatrize zugeordnet sind, nacheinander auf einer entsprechenden der Ausgangsleitungen ausgegeben werden. Die Symbole $s_{j,i}$ jeder Datenleitung werden dann einer Modulationsstufe zugeführt, in welcher eine Frequenzmodulation der einzelnen der parallelen Leitungen vorgenommen wird, wobei jeder Leitung eine eigene Frequenz $f_j$ mit j = 1, ..., m als Subressourcen der zweiten Trägerressourcefrequenz F zugeordnet wird. Die nach der Modulation resultierenden Daten werden in für sich bekannter Art und Weise summiert und z. B. einer Funkschnittstelle V zur Übertragung an einen Empfänger R übermittelt. Der Empfänger R kann beispielsweise ein mobiles oder stationäres Endgerät des WLAN-Standards sein. Zweckmäßigerweise weist der Empfänger R eine Steuereinrichtung X und einen Speicher M auf, welche entsprechend ausgebildet sind, die empfangenen codierten Daten zu decodieren. Insbesondere ist in dem Speicher M eine entsprechende Matrize zur Decodierung des Codes **C** bzw. der Generatormatrize abgespeichert.

Bei dieser Anordnung findet somit eine Zuweisung der einzelnen Codeelemente $c_{k,1}$ des Codes c, d.h. der codierten Daten $d_a$, auf die Symbole $s_{j,i}$ derart statt, dass jedem Codeelement $c_{k,1}$ jeweils ein Symbol $s_{j,i}$ ein-eindeutig zugeordnet wird.

Bei der Bestimmung des Codes C in Form einer Code-Matrize mit den codierten Daten wird als Randbedingung festgelegt, dass der Rang mindestens D/2 entsprechen soll, somit bei einem Rang von 2 zumindest wahlweise entweder ein Fehler innerhalb einer Zeile oder ein Übertragungsfehler innerhalb einer Spalte korrigiert werden kann. Dies entspricht der Korrektur eines Übertragungsfehlers bei wahlweise dem Ausfall eines Teils oder einer vollständigen Subressource der ersten Trägerressource Frequenz, somit eines Frequenzsubkanals, oder der zweiten Trägerressource Zeit, somit einem Zeitschlitz $t_i$.

Je größer Rang d der Matrize des Codes C ist, desto mehr Übertragungsfehler können empfängerseitig korrigiert werden. Die Verwendung eines Codes in Form eines Rang-Codes (rank code) ermöglicht dabei die Korrektur beliebiger Fehlermuster, die sich auf die Reihen bzw. Spalten verteilen können. Diese sind beispielhaft für die Abfolge der Symbole $s_{j,i}$ abgebildet.

Vorgeschlagen wird somit die Kombination von Rang-Codes mit der für sich bekannten OFDM-Übertragungstechnik. Rang-Codes werden dabei über erweiterte Galois-Felder $GF(2^m)$ konstruiert. Dabei ist die maximale Distanz eines (n,k*,d)-Rank-Codes durch d = n - k* + 1 definiert. Die Anzahl der Codeworte ist 2(mk*). Jedes Codewort kann als eine Matrize der Größe m $\times$ n mit binären Einträgen dargestellt werden, wobei n die Codelänge ist. Falls ein (n, k*,d)-Rank-Code betrachtet wird, dann hat jede Code-Matrize C ungleich Null zumindest den Rang d. Dies ermöglicht beliebige Fehlermuster zu korrigieren, welche in beliebigen s Zeilen und in beliebigen r Spalten der Matrize verteilt sind, vorausgesetzt, dass die Gesamtfehlerzahl maximal t = s+r<d/2=(n-k*+1)/2 ist.

Verglichen mit einem (n,k*,d)-Reed-Solomon-Code mit den gleichen Parametern können die Codeworte $c_{k,1}$ des Rank-Codes als die Matrizen der Größe m $\times$ n mit binären Einträgen dargestellt werden. Auch beim Reed-Solomon-Code hat eine Code-Matrize ungleich Null zumindest d Spalten ungleich Null. Dies ermöglicht jedoch nur die Korrektur von Fehlern, welche sich in t < d/2 Spalten befinden. Falls jedoch alle Fehler in einer einzelnen Zeile angeordnet sind und die Zahl der Fehler größer als (d-1)/2 ist, scheitert die Decodierung beim Reed-Solomon-Verfahren. Dahingegen sind beim vorgestellten Rank-Code-Verfahren auch zumindest d Zeilen mit Werten ungleich Null vorhanden, so dass die ursprüngliche Information vor der Übertragung über die Funkschnittstelle V sowohl redundant auf mehrere Zeilen als auch redundant auf mehrere Spalten eines orthogonalen Systems verteilt wird.

Jede binäre Code-Matrize wird als eine binäre Zeichenfolge abgebildet, beispielsweise spaltenweise. Dabei kann angenommen werden, dass eine Konstellation der Größe $q = 2^v$ verwendet wird, wobei z. B. v = 2 bei QPSK gilt. Für eine 16-QAM-Modulation gilt z. B. q = 16 und v = 4. Die Zeichenfolge wird in sequenzielle Stücke der Länge v unterteilt, wobei jedes Stück in das zugeordnete Signal der Konstellation abgebildet wird.

Bei Betrachtung eines OFDM-Systems mit m Trägern und mit einer Modulationskonstellation der Größe q wird ein Parameter N = mv gewählt. Dann wird eine Code-Matrize gemäß den Bedingungen des Rank-Codes als eine Abfolge von n Zeitrahmen bzw. Zeitschlitzen moduliert. Dadurch ist es möglich, dass aufgrund von Co-Channel-Interference oder hochgradig korreliertem Fading mehrere Zeitrahmen, z. B. (n-k*)/2, in hohem Maße beeinträchtigt werden. In diesem Fall könnten sowohl Rang-Codes als auch Reed-Solomon-Codes diese Fehler korrigieren. Falls jedoch nur ein einziger Subträger $f_j$ der anderen Ressource F während der gesamten Codewortdauer unterdrückt wird, kann ein Reed-Solomon-Code einen solchen Fehler nicht korrigieren, während ein Rang-Code dies kann. Außerdem benötigt ein Verfahren unter Verwendung eines Rang-Codes keinen Interleaver oder im ungünstigen Fall lediglich einen Interleaver mit einem geringen Interleaving-Grad.

Ein Einsatz von Rang-Codes ist insbesondere bei einer OFDM-Übertragungstechnik zum Übertragen hoher Datenraten in zukünftigen funkgestützten Systemen der vierten Generation vorteilhaft. Außerdem bieten Rang-Codes einen Schutz gegen nicht berechtigte Zugriffe ohne eine entsprechende Änderung von Codierern und Decodierern.

Bei dieser Verfahrensweise wird somit die zweite Ressource, d. h. die theoretisch unendliche Zeitreihe derart gruppiert, dass pro Code C eine Gruppenbildung der zeitlichen Subressource $t_i$ derart vorgenommen wird, dass jede Gruppe von zeitlichen Subressourcen $t_i$ die gleiche Anzahl von Elementen aufweist, wie der Code als Codelänge hat.

**Patentansprüche**

1. Verfahren zum codemodulierten Übertragen von Informationen ($d_a$, $d_{a+1}$, ... ) in einem Kommunikationssystem (WLAN) über einen Träger (V) mit zumindest zwei voneinander unabhängigen und zueinander orthogonalen Ressourcen (F, T),

**dadurch gekennzeichnet, dass**

die zu übertragende Information ($d_a$) in einen zumindest zweidimensionalen Code (**C**; $c_{k,1}$, k = 1...m, l = 1...n) codiert und zumindest einer Subressource ($f_j$) der ersten der Ressourcen (F) und zumindest einer Subressource ($t_i$) der zweiten Ressource (T) zugeordnet wird, wobei die Zuordnung derart redundant erfolgt, dass ein Übertragungsfehler sowohl bei der ersten Subressource ($s_j$) als auch bei der zweiten Subressource ($t_i$) empfangsseitig rekonstruierbar ist.

2. Verfahren nach Anspruch 1, bei dem
als Übertragungsfehler auch der vollständige Verlust einer ganzen Subressource ($f_i$, $t_i$) sowohl bei der ersten Subressource ($f_j$) als auch bei der zweiten Subressource ($t_i$) empfangsseitig rekonstruierbar ist.

3. Verfahren nach Anspruch 1 oder 2, bei dem
der Code (**C**) gemäß einem Matrix-Schema mit Zeilen (j) für die Subressourcen ($f_j$) der ersten Ressource (F) und mit Spalten (i) für die Subressource ($t_i$) der zweiten Ressource (T) aufgebaut wird.

4. Verfahren nach Anspruch 3, bei dem
der Code (**C**) den Bedingungen einer Matrize bzw. Determinante mit einem Rang (d) größer oder gleich dem Wert 2 genügt.

5. Verfahren nach Anspruch 4, bei dem
auf s Zeilen und r Spalten beliebig verteilte Übertragungsfehlermuster empfangsseitig rekonstruierbar sind, wenn die Summe t der fehlerhaften Zeilen und Spalten kleiner dem halben Rang (d) der Matrize ist.

6. Verfahren nach Anspruch 5, bei dem
für die Summe t der fehlerhaften Zeilen s und Spalten r gilt:

$$t = s+r<d/2=(n-k^*+1)/2$$

mit n als Codelänge und $k^*$ als Nachrichtenlänge eines (n,$k^*$,d)-Codes und mit d als Rang des Codes.

7. Verfahren nach Anspruch 6, bei dem
der Wert d des Rangs des Codes (**C**) der Redundanzlänge (d) des Codes (**C**) entspricht.

8. Verfahren nach einem der vorstehenden Ansprüche 1 bis 7, bei dem
die Anzahl (m) der ersten Subressource ($f_j$) gleich der Anzahl der Bit pro Symbol ($s_{j,i}$) eines Galois-Feldes (GF) mit $2^m$ Symbolen ist.

9. Verfahren nach einem vorstehenden Anspruch, bei dem
der Code (**C**) als Rang-Code über ein Galois-Feld (GF) mit $2^m$ Symbolen definiert wird.

10. Verfahren nach einem vorstehenden Anspruch, bei dem
die zweite Ressource (T) pro Code (**C**) in eine der Codelänge entsprechenden Anzahl (n) von Subressourcen gruppiert wird.

11. Verfahren nach einem vorstehenden Anspruch, bei dem
die Codeelemente ($c_{k,1}$) des Codes (**C**) jeweils einem Symbol ($s_{j,i}$) eines OFDM-Systems im Zeit-Frequenz-Bereich (T, F) ein-eindeutig zugeordnet werden.

12. Verfahren nach einem vorstehenden Anspruch, bei dem die Codeelemente ($c_{k,1}$) jeweils einem Symbol ($s_{j,i}$) eines orthogonalen Übertragungssystems im Zeit-Raum-Bereich ein-eindeutig zugeordnet werden.

13. Kommunikationssystemvorrichtung mit

- zumindest einem Eingang für Informationen ($d_a$),
- einer Speichereinrichtung (**M**) zum Zwischenspeichern solcher Informationen und eines Codes (**C**) aus codierten solcher Informationen,

- einer Steuereinrichtung (X) zum Verarbeiten der Information ($d_a$) gemäß einem Verfahren nach einem der vorstehenden Ansprüche und
- einem Ausgang zum Übertragen der codemodulierten Informationen.

# FIG 1

Rang-Codewort $C_{k,l}$ in Matrix-Darstellung

OFDM Symbole $S_{j,i}$ im Zeit-Freq.-Bereich

Symbol

s: frequenzselekt. Schwund

r: Time/Zeit-Interferenz oder zeitvar. Schwund

EP 1 437 850 A1

# FIG 2

$$C = \begin{pmatrix} C_{1,1} & C_{1,2} & \dots & C_{1,l} & \dots & C_{1,n} \\ C_{2,1} & C_{2,2} & \dots & C_{2,l} & \dots & C_{2,n} \\ C_{k,1} & C_{k,2} & \dots & C_{k,l} & \dots & C_{k,n} \\ C_{N,1} & C_{N,2} & \dots & C_{N,l} & \dots & C_{N,n} \end{pmatrix}$$

mit: Rang $C \geq 2$
für $k \neq l$: $|C_k - C_l| \geq 2$
$N = mv$
m: Anzahl der Unter-Träger
v: zusammengefasste Binärelemente

Gruppe aus 2. Subressourcen
der 2. Ressource Zeit T

|       | $t_1$ | $t_2$ | ... | $t_i$ | ... | $t_n$ | $t_{n+1}$ |
|-------|-------|-------|-----|-------|-----|-------|-----------|
| $f_1$ | $S_{1,1}$ | $S_{1,2}$ | ... | $S_{1,i}$ | ... | $S_{1,n}$ | $S'_{1,1}$ |
| $f_2$ | $S_{2,1}$ | $S_{2,2}$ | ... | $S_{2,i}$ | ... | $S_{2,n}$ | $S'_{2,1}$ |
| $f_j$ | $S_{j,1}$ | $S_{j,2}$ | ... | $S_{j,i}$ | ... | $S_{j,n}$ | $S'_{j,1}$ |
| $f_m$ | $S_{m,1}$ | $S_{m,2}$ | ... | $S_{m,i}$ | ... | $S_{m,n}$ | $S'_{m,1}$ |

1. Subressourcen
der 1. Ressource
Frequenz F

$f_1, \dots, f_m$

WLAN

$D$ — $\dots, d_{a+2}, d_{a+1}, d_a$ — Cod — $\dots, c_i, \dots$ — Map — $\dots, S_{j,i}, \dots$ — S/P $\frac{1}{m}$

$S_{1,i}\dots$ $S_{2,i}\dots$ $S_{j,i}\dots$ $S_{m,i}\dots$

$f_j$ $f_m$

$\Sigma$ — D

V

R X M

## EUROPÄISCHER RECHERCHENBERICHT

**Europäisches Patentamt**

Nummer der Anmeldung

EP 03 00 0426

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 6 452 981 B1 (POLLACK MICHAEL A ET AL) 17. September 2002 (2002-09-17) * Spalte 1, Zeile 66 - Spalte 2, Zeile 67 * --- | | H04L1/00 |
| A | US 6 282 168 B1 (ZEHAVI EPHRAIM ET AL) 28. August 2001 (2001-08-28) * das ganze Dokument * ----- | | |

**RECHERCHIERTE SACHGEBIETE (Int.Cl.7)**

H04L

Der vorliegende Recherchenbericht wurde für alle Patentansprüche erstellt

| Recherchenort | Abschlußdatum der Recherche | Prüfer |
|---|---|---|
| DEN HAAG | 6. Juni 2003 | Coppieters, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 03 00 0426

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-06-2003

| Im Recherchenbericht angeführtes Patentdokument | Datum der Veröffentlichung | Mitglied(er) der Patentfamilie | | Datum der Veröffentlichung |
|---|---|---|---|---|
| US 6452981        B1 | 17-09-2002 | US | 6144711 A | 07-11-2000 |
|  |  | US | 2003072382 A1 | 17-04-2003 |
|  |  | US | 6377631 B1 | 23-04-2002 |
|  |  | AU | 4238697 A | 19-03-1998 |
|  |  | CA | 2302289 A1 | 05-03-1998 |
|  |  | EP | 0920738 A1 | 09-06-1999 |
|  |  | EP | 0931388 A2 | 28-07-1999 |
|  |  | JP | 2001505723 T | 24-04-2001 |
|  |  | WO | 9809385 A2 | 05-03-1998 |
|  |  | WO | 9809381 A1 | 05-03-1998 |
|  |  | WO | 9809395 A1 | 05-03-1998 |
| US 6282168        B1 | 28-08-2001 | US | 6151296 A | 21-11-2000 |
|  |  | US | 2001030939 A1 | 18-10-2001 |
|  |  | AU | 759184 B2 | 10-04-2003 |
|  |  | AU | 8145298 A | 04-01-1999 |
|  |  | BR | 9806005 A | 18-09-2001 |
|  |  | CN | 1234936 T | 10-11-1999 |
|  |  | EP | 0919098 A2 | 02-06-1999 |
|  |  | FI | 990353 A | 19-04-1999 |
|  |  | JP | 2001500713 T | 16-01-2001 |
|  |  | NO | 990758 A | 16-04-1999 |
|  |  | WO | 9858496 A2 | 23-12-1998 |
|  |  | ZA | 9805386 A | 07-04-1999 |

EPO FORM P0461

Für nähere Einzelheiten zu diesem Anhang : siehe Amtsblatt des Europäischen Patentamts, Nr.12/82